# EUROPEAN PATENT APPLICATION

(11) **EP 4 525 124 A1**
(43) Date of publication of application: **19.03.2025**
(21) Application number: 23917177.0
(22) Date of filing: 14.11.2023
(51) Int. Cl.: H01M 10/0569

(54) **ELECTROLYTE SOLUTION FOR SODIUM SECONDARY BATTERY, SODIUM SECONDARY BATTERY, AND ELECTRIC DEVICE**

(30) Priority: 16.01.2023 CN 202310075553
(71) Applicant: CONTEMPORARY AMPEREX TECHNOLOGY (HONG KONG) LIMITED, Central (HK)
(72) Inventor: CHEN, Shigang, Ningde, Fujian 352100 (CN); ZHANG, Xinxin, Ningde, Fujian 352100 (CN); GUO, Bingkun, Ningde, Fujian 352100 (CN); LI, Xiaolong, Ningde, Fujian 352100 (CN); YAO, Shikang, Ningde, Fujian 352100 (CN); ZHOU, Qicheng, Ningde, Fujian 352100 (CN)
(74) Representative: Ziebig Hengelhaupt Intellectual Property Attorneys Patentanwaltskanzlei PartGmbB
(86) International application number: PCT/CN2023/131559
(87) International publication number: WO 2024/152709

(57) **Abstract**

This application provides an electrolyte for sodium secondary battery, a sodium secondary battery, a battery module, a battery pack, and an electric apparatus. The electrolyte for sodium secondary battery includes an ester solvent and a mixture solvent, where the mixture solvent includes one or more of a fluoroether diluent, a flame retardant, and ionic liquid. The electrolyte of this application includes the ester solvent and the mixture solvent including one or more of the fluoroether diluent, the flame retardant, and the ionic liquid, so that the interface stability of a battery can be significantly enhanced, the cycling performance and storage stability of the battery can be improved, and the safety of the battery can be improved.

## Description

### CROSS-REFERENCE TO RELATED APPLICATIONS

This application refers to Chinese Patent Application No. 202310075553.2, filed on January 16, 2023 and entitled "ELECTROLYTE FOR SODIUM SECONDARY BATTERY, SODIUM SECONDARY BATTERY, AND ELECTRIC APPARATUS", which is incorporated herein by reference in its entirety.

### TECHNICAL FIELD

This application relates to the field of secondary battery technologies, and in particular, to an electrolyte for sodium secondary battery, a sodium secondary battery, a battery module, and an electric apparatus.

### BACKGROUND

Sodium secondary batteries have attracted much attention due to their advantages such as abundant raw material sources, low costs, and similar operating mechanisms to lithium-ion batteries.

As an important part of a secondary battery, an electrolyte plays a crucial role in rate performance, safety, cycle life, and the like of the battery. However, since sodium has a larger relative atomic mass and a higher standard electrode potential than lithium, sodium secondary batteries have more severe dissolution of solid electrolyte interfaces (SEI). This leads to side reactions, electrolyte consumption, decreased chemical and electrochemical stability of the batteries, shortened cycle life, and deteriorated safety. Therefore, it is necessary to develop a chemically and electrochemically stable electrolyte, so as to effectively improve the performance of sodium secondary batteries.

### SUMMARY

This application has been made in view of the foregoing issues, with an objective to provide an electrolyte for sodium secondary battery, where the electrolyte for sodium secondary battery includes an ester solvent and a mixture solvent. A sodium secondary battery prepared using the electrolyte has improved interface stability, high-temperature performance, cycling performance, and storage stability.

According to a first aspect of this application, an electrolyte for sodium secondary battery is provided, including an ester solvent and a mixture solvent, where the mixture solvent includes one or more of a fluoroether diluent, a flame retardant, and ionic liquid.

In any embodiment, the fluoroether diluent includes a compound represented by formula I or formula II, 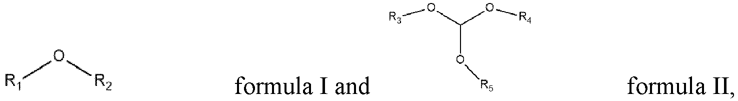 where R₁, R₂, R₃, R₄, and R₅ are each independently selected from unsubstituted or fluorinated C₁-C₆ alkyl; at least one of R₁ and R₂ contains a fluorine atom; and at least one of R₃, R₄, and R₅ contains a fluorine atom.

In any embodiment, at 25°C, the solubility of sodium bis(fluorosulfonyl)imide in the fluoroether diluent is less than 10 g.

In any embodiment, at 25°C, the solubility of sodium hexafluorophosphate in the fluoroether diluent is less than 4 g. In any embodiment, the fluoroether diluent includes one or more of bis(2,2,2-trifluoroethyl) ether, 1,1,2,2-tetrafluoroethyl methyl ether, 1,1,2,2-tetrafluoroethyl-2,2,3,3-tetrafluoropropyl ether, 1,1,2,2-tetrafluoroethyl-2,2,2-trifluoroethyl ether, tris(trifluoroethoxy)methane, methyl nonafluorobutyl ether, 1,1,1,3,3,3-hexafluoroisopropyl methyl ether, and 1H, 1H, 5H-octafluoropentyl-1,1,2,2-tetrafluoroethyl ether.

The fluoroether diluent allows the electrolyte containing the ester solvent to maintain a low viscosity, avoiding or reducing side reactions between the ester solvent and the sodium secondary battery, and improving the interface stability, cycling performance, and storage stability of the battery.

In any embodiment, the flame retardant includes one or more of a phosphate compound, a phosphite compound, a polyphosphazene compound, a highly fluorinated or perfluorinated amide compound, and a ketone compound.

In any embodiment, the phosphate compound includes a compound represented by formula III, 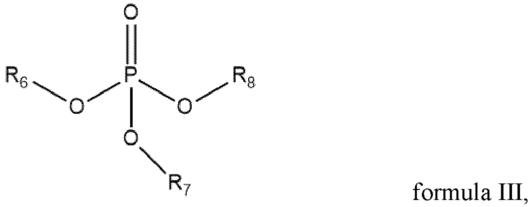 where R₆, R₇, and R₈ are each independently selected from hydrogen and unsubstituted or fluorinated C₁-C₆ alkyl; at least one of R₆, R₇, and R₈ includes a fluorine atom; and R₇ and R₈ optionally form a cyclic structure together with oxygen connected thereto and phosphorus connected to oxygen.

In any embodiment, the phosphite compound includes a compound represented by formula IV, 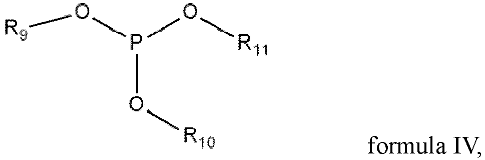 where R₉, R₁₀, and R₁₁ are each independently selected from unsubstituted or silylated C₁-C₆ alkyl.

In any embodiment, the polyphosphazene compound includes a polymer represented by formula VI, 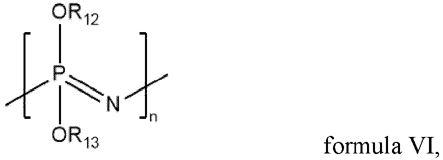 where R₁₂ and R₁₃ are each independently selected from substituted or unsubstituted C₁-C₆ alkyl.

In any embodiment, the flame retardant includes one or more of trimethyl phosphate, triethyl phosphate, tripropyl phosphate, tributyl phosphate, dimethyl phosphate, tri(2,2,2-trifluoroethyl) phosphate, tris(trimethylsilyl) phosphite, 2-(2,2,2-trifluoroethoxy)-1,3,2-dioxaphospholane 2-oxide, methyl 3,3,3-trifluorophosphonate, poly[bis(ethoxy)phosphazene], 2,2,2-trifluoro-N,N-dimethylacetamide, and perfluoro-2-methyl-3-pentanone.

Molecules of the flame retardant interact with molecules of the ester solvent to weaken their solvation structures, thereby achieving an effect of a high-concentration electrolyte while improving the safety of the battery.

In any embodiment, cations of the ionic liquid include one or more of nitrogen-containing onium ions and phosphorus-containing onium ions, and anions of the ionic liquid include one or more of halogen ions, phosphate ions, borate ions, and sulfimide anions.

In any embodiment, the cations of the ionic liquid include one or more of 1-butyl-3-methylimidazolium, 1-benzyl-3-methylimidazolium, 3-methyl-1-ethoxycarbonyl methylimidazolium, 1-alkyl-3-methylimidazolium, 1-[(trimethylsilyl)methyl]benzotriazolium, N-alkyl-N-methylpiperidinium, 5-azoniaspiro[4.4]nonane, trihexyl(tetradecyl)phosphonium ions, tetrabutylphosphonium ions, and N-butyl-N-methylpyrrolidinium; and optionally, the cations of the ionic liquid include tetrabutylphosphonium ions or N-butyl-N-methylpyrrolidinium.

In any embodiment, the anions of the ionic liquid include one or more of chloride ions, bromide ions, iodide ions, hexafluorophosphate, tetrafluoroborate, dicyanamide anions, bis(fluorosulfonyl)imide anions, and bis(trifluoromethylsulfonyl)imide; and optionally, the anions of the ionic liquid include one or more of hexafluorophosphate, bis(fluorosulfonyl)imide anions, and bis(trifluoromethylsulfonyl)imide anions.

In any embodiment, the ionic liquid includes one or more of tetrabutylphosphonium-hexafluorophosphate, N-butyl-N-methylpyrrolidine-hexafluorophosphate, 1-butyl-3-methylimidazole-bis(fluorosulfonyl)imide, 1-benzyl-3-methylimidazole-bis(fluorosulfonyl)imide, 1-alkyl-3-methylimidazole-bis(trifluoromethylsulfonyl)imide, 1-alkyl-3-methylimidazole-chloride, and N-alkyl-N-methylpiperidine-tetrafluoroborate.

The ionic liquid has wide electrochemical stability windows on both an oxidation side and a reduction side, which can ensure that the ionic liquid or an electrolyte obtained after the ionic liquid is mixed with the ester solvent also has a wide window. In addition, the ionic liquid can also stabilize a solid electrolyte interface (SEI) on a negative electrode side, thereby significantly improving the interface stability of the battery.

In any embodiment, the ester solvent includes one or more of ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, γ-butyrolactone, 1,3-propanesultone, methyl propionate, methyl butyrate, ethyl acetate, ethyl propionate, propyl propionate, and ethyl butyrate; and optionally, the ester solvent includes one or more of diethyl carbonate, ethyl methyl carbonate, and fluoroethylene carbonate.

In any embodiment, based on a total mass of the electrolyte, a mass percentage of the mixture solvent is greater than 10%.

In any embodiment, the electrolyte includes a sodium salt, where the sodium salt includes one or more of sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium bis(oxalato)borate, sodium difluoro(oxalato)borate, sodium tetraphenylborate, sodium trifluoromethanesulfonate, sodium bis(fluorosulfonyl)imide, sodium bis(trifluoromethanesulfonyl)imide, and sodium (perfluorobutylsulfonyl)imide.

When the above sodium salt is applied to the electrolyte, the battery has a wide electrochemical window and exhibits excellent cycling performance and storage performance.

In any embodiment, based on the total mass of the electrolyte, a mass percentage of the sodium salt is 2% to 70%, optionally 30% to 50%.

When based on the total mass of the electrolyte, the mass percentage of the sodium salt is 2% to 70%, the electrolyte provided in this application can enhance the stability of the solid electrolyte interface (SEI) and improve the cycling performance and storage performance of the battery. When the mass percentage of the sodium salt is 30% to 50%, the high-concentration sodium salt can further reduce free solvent molecules in the solvent, reduce side reactions between the solvent and a negative electrode, and improve the cycling performance, storage performance, and safety of the battery.

In any embodiment, a volume ratio of the ester solvent to the mixture solvent is 1:9 to 4:1, optionally 3:7 to 7:3.

When the volume ratio of the ester solvent to the mixture solvent is 1:9 to 4:1, the battery has a wide electrochemical window and excellent cycling performance and storage performance. When the volume ratio of the ester solvent to the mixture solvent is 3:7 to 7:3, the cycling performance and storage performance of the battery is further improved.

According to a second aspect of this application, a secondary battery is provided, including the electrolyte according to the first aspect.

In any embodiment, the secondary battery is a sodium metal battery.

In any embodiment, the secondary battery is a sodium secondary battery with no negative electrode.

In any embodiment, the secondary battery includes a positive electrode plate, where the positive electrode plate includes a positive electrode active material, and the positive electrode active material includes one or more of a Prussian blue compound, a polyanionic compound, and a layered oxide.

In any embodiment, a surface of a particle of the positive electrode active material is provided with a coating layer, where the coating layer includes one or more of a carbon material, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride.

The coating of the coating layer can effectively enhance the stability of the positive electrode active material, reduce metal dissolution and particle fracture of the positive electrode active material, especially the layered oxide, during cycling, and effectively improve the cycling performance and storage stability of the battery.

In any embodiment, a thickness of the coating layer is 2 nm to 1000 nm, optionally 10 nm to 100 nm.

The coating layer with an appropriate thickness can achieve an effective improvement effect, avoiding excessively high sheet resistance of the positive electrode and battery performance degradation due to the excessive thickness of the coating layer.

In any embodiment, the secondary battery includes a negative electrode plate, where the negative electrode plate includes a negative electrode current collector and a primer layer provided on at least one surface of the negative electrode current collector, and the primer layer includes one or more of carbon nanotubes, graphite, graphene, silver-carbon composite nanoparticles, and tin-carbon composite nanoparticles.

In any embodiment, the negative electrode current collector includes at least one of a metal foil, a metal foam current collector, a metal mesh current collector, a carbon felt current collector, a carbon cloth current collector, a carbon paper current collector, and a composite current collector.

In any embodiment, a surface density of the primer layer is 2 g/m² to 50 g/m².

In any embodiment, a thickness of the primer layer is 1 µm to 100 µm.

The primer layer within the above range can effectively guide the deposition at a negative electrode, reduce the formation of sodium dendrites at the negative electrode, and improve the uniformity of sodium metal deposition. In addition, the primer layer with an appropriate surface density and thickness can really make the absence of the negative electrode possible, improving the energy density and safety performance of the battery.

According to a third aspect of this application, a battery module is provided, including the sodium secondary battery according to the second aspect.

According to a fourth aspect of this application, a battery pack is provided, including the sodium secondary battery according to the second aspect or the battery module according to the third aspect.

According to a fifth aspect of this application, an electric apparatus is provided, including at least one of the sodium secondary battery according to the second aspect, the battery module according to the third aspect, or the battery pack according to the fourth aspect.

### BRIEF DESCRIPTION OF DRAWINGS

FIG. 1 is a schematic diagram of a secondary battery according to an embodiment of this application;
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4; and
FIG. 6 is a schematic diagram of an electric apparatus using a secondary battery as a power source according to an embodiment of this application.

Description of reference signs:
1. battery pack; 2. upper box body; 3. lower box body; 4. battery module; 5. secondary battery; 51. housing; 52. electrode assembly; and 53. cover plate.

### DESCRIPTION OF EMBODIMENTS

Embodiments that specifically disclose an electrolyte for sodium secondary battery, a sodium secondary battery, a battery module, a battery pack, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combinations of real numbers between a and b, where both a and b are real numbers. For example, a value range of "0-5" means that all real numbers in the range of "0-5" are listed herein, and "0-5" is just an abbreviated representation of a combination of these numbers. In addition, when a parameter is expressed as an integer greater than or equal to 2, it is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any order, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

An ester solvent is a solvent commonly used in a sodium secondary battery electrolyte. However, an electrolyte containing the ester solvent is prone to reduction due to a narrow electrochemical stability window on a reduction side. This characteristic of high reducibleness and an insufficiently stable solid electrolyte interface (SEI) formed lead to continuous consumption of the electrolyte during cycling and seriously shortened cycle life of the electrolyte. In addition, the electrolyte containing the ester solvent undergoes direct side reactions with a sodium metal electrode, and a solvation complex formed by an electrolytic salt dissolved exacerbates the side reactions. C-O fracture is typically used as a decomposition pathway between the electrolyte containing the ester solvent and sodium, and side reaction products are often flammable gases such as carbon monoxide. This causes severe deterioration in the safety of the sodium secondary battery and hinders the direct application of the ester solvent in the sodium secondary battery, especially in a sodium secondary battery with no negative electrode.

### [Electrolyte for sodium secondary battery]

In view of this, this application provides an electrolyte for sodium secondary battery. The electrolyte for sodium secondary battery includes an ester solvent and a mixture solvent, where the mixture solvent includes one or more of a fluoroether diluent, a flame retardant, and ionic liquid.

In this specification, the term "sodium secondary battery" refers to a secondary battery that uses sodium ions as charge carriers. A negative electrode active material of the sodium secondary battery includes a carbon-based material, a titanium-based material, an alloy material, a transition metal oxide, a transition metal selenide, and sodium metal. A secondary battery with a negative electrode active material including sodium metal is referred to as a sodium metal battery. In this specification, "ester solvent" refers to a solvent whose molecules are ester compounds.

In this specification, the term "mixture solvent" refers to one or more additional solvents used in combination with the ester solvent in the electrolyte. The mixture solvent mixed with the ester solvent can synergistically improve the electrochemical performance of the electrolyte. The mixture solvent can be mixed with the ester solvent at any ratio. In some embodiments, based on a total mass of the electrolyte, a mass percentage of the mixture solvent is greater than 10%.

In this specification, the term "fluoroether diluent" refers to a fluoroether solvent that serves as a diluent. Due to weak interactions with sodium ions, the solvent is unlikely to participate in first solvation shell structures of the sodium ions, so that the solvent can function as an electrolyte diluent.

In an electrolyte system of a secondary battery, cations in an electrolytic salt form a solvation structure through interactions with solvent molecules. The solvation structure typically includes a first solvation shell in which strong interactions are present between the cations and solvent molecules and a second solvation shell in which weak interactions are present between the cations and solvent molecules. The strong interactions and close connection between the cations and solvent molecules in the first solvation shell cause the cations to move along with the first solvation shell rather than migrate independently.

The presence of the fluoroether solvent in the second solvation shell of the solvation structure can reduce reactions between ester solvent molecules and negative electrode metal, improve the cycling performance and storage stability of the battery, and improve the safety of the battery.

In some embodiments, at 25°C, the solubility of sodium bis(fluorosulfonyl)imide in the fluoroether diluent is less than 10 g.

In some embodiments, at 25°C, the solubility of sodium hexafluorophosphate in the fluoroether diluent is less than 4 g.

Molecules of the fluoroether diluent have high steric hindrance and weak interactions with the sodium ions, so that the solubility of the electrolytic salt in the fluoroether diluent is low.

**In** this specification, the term "flame retardant" refers to a solvent that has a high flash point and can generate a flame-resistant or non-flammable effect such that a battery undergoes no combustion or explosion under overheating conditions.

**In** this specification, the term "ionic liquid" refers to a salt that entirely consists of cations and anions and is in a liquid state at room temperature. Room temperature refers to 25°C±5°C.

**In** some embodiments, the mixture solvent includes the fluoroether diluent. In some embodiments, the mixture solvent includes the flame retardant. In some embodiments, the mixture solvent includes the ionic liquid. In some embodiments, the mixture solvent is a mixture of the fluoroether diluent and the flame retardant. In some embodiments, the mixture solvent is a mixture of the fluoroether diluent and the ionic liquid. In some embodiments, the mixture solvent is a mixture of the flame retardant and the ionic liquid. In this application, the electrolyte includes an ester electrolyte and a mixture solvent containing one or more of the fluoroether diluent, the flame retardant, and the ionic liquid. This can avoid or reduce side reactions between a sodium metal negative electrode and the electrolyte and the resulting unstable solid electrolyte interface (SEI) films, thereby enhancing the interface stability, improving the cycling performance and storage stability of the battery, and improving the safety of the battery.

**In** some embodiments, the fluoroether diluent includes a compound represented by formula I or formula II, 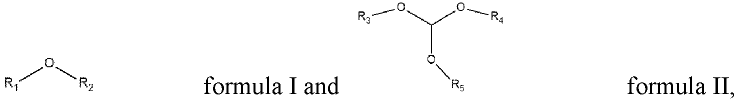 where R₁, R₂, R₃, R₄, and R₅ are each independently selected from unsubstituted or fluorinated C₁-C₆ alkyl; at least one of R₁ and R₂ contains a fluorine atom; and at least one of R₃, R₄, and R₅ contains a fluorine atom.

In this specification, the term "C₁-C₆ alkyl" refers to a straight-chain or branched-chain hydrocarbon chain group including only carbon and hydrogen atoms, where the group has no unsaturation, has one to six carbon atoms, and is attached to the rest of a molecule through a single bond.

In this specification, the term "substituted" refers to that at least one hydrogen atom of the compound or chemical part is substituted with substituents, where the substituents are each independently selected from a group consisting of: hydroxyl, thiol, amino, cyano, nitro, aldehyde, halogen atoms, alkenyl, alkynyl, aryl, heteroaryl, C₁-C₆ alkyl, and C₁-C₆ alkoxy.

In this specification, the term "aryl" refers to an aromatic ring system with at least one ring being aromatic, which includes but is not limited to phenyl, biphenyl, indanyl, 1-naphthyl, 2-naphthyl, and tetrahydronaphthyl.

In some embodiments, the fluoroether diluent includes one or more of bis(2,2,2-trifluoroethyl) ether (BTFE), 1,1,2,2-tetrafluoroethyl methyl ether (TME), 1,1,2,2-tetrafluoroethyl-2,2,3,3-tetrafluoropropyl ether (TTE), 1,1,2,2-tetrafluoroethyl-2,2,2-trifluoroethyl ether (TFTFE), tris(trifluoroethoxy)methane (TFEO), methyl nonafluorobutyl ether (MFE), 1,1,1,3,3,3-hexafluoroisopropyl methyl ether (HFPM), and 1H,1H,5H-octafluoropentyl-1,1,2,2-tetrafluoroethyl ether (OFE).

The fluoroether diluent allows the electrolyte containing the ester solvent to maintain a low viscosity, avoiding or reducing side reactions between the ester solvent and negative electrode sodium metal, improving the interface stability, cycling performance, and storage stability of the battery, and improving the safety of the battery.

In some embodiments, the flame retardant includes one or more of a phosphate compound, a phosphite compound, a polyphosphazene compound, a highly fluorinated or perfluorinated amide compound, and a ketone compound.

The above flame retardants themselves have high flash points and are non-flammable. Additionally, they are weak solvents with low dielectric constants. Although they participate in solvation structures, their coordination with sodium ions is not as high as that of ester solvent molecules. The flame retardant solvent molecules interact with the ester solvent molecules to weaken their solvation structures and achieve a high-concentration electrolyte, avoiding or reducing side reactions between the ester solvent and sodium metal, thereby improving the safety of the battery.

In some embodiments, the phosphate compound includes a compound represented by formula III, 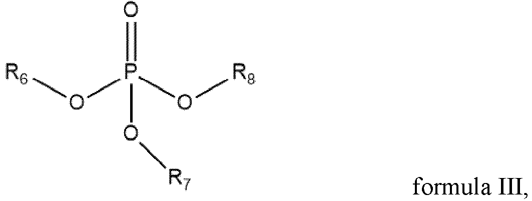 where R₆, R₇, and R₈ are each independently selected from hydrogen and unsubstituted or fluorinated C₁-C₆ alkyl; at least one of R₆, R₇, and R₈ includes a fluorine atom; and R₇ and R₈ optionally form a cyclic structure together with oxygen connected thereto and phosphorus connected to oxygen.

In this specification, the term "cyclic structure" refers to a structure in which atoms in a molecule are arranged in a ring. The number of rings in the cyclic structure is not limited. For example, the cyclic structure may be a 4-membered ring, a 5-membered ring, a 6-membered ring, or a 7-membered ring.

In some embodiments, the phosphite compound includes a compound represented by formula IV, 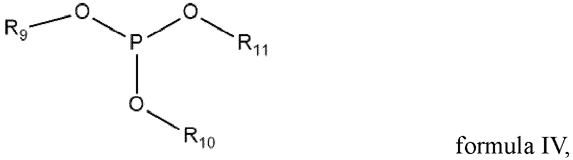 where R₉, R₁₀, and R₁₁ are each independently selected from unsubstituted or silylated C₁-C₆ alkyl.

In some embodiments, the polyphosphazene compound includes a polymer represented by formula VI, 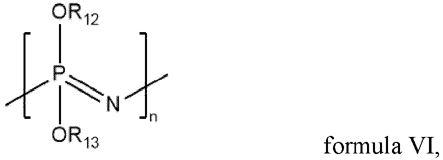 where R₁₂ and R₁₃ are each independently selected from substituted or unsubstituted C₁-C₆ alkyl.

In some embodiments, the flame retardant includes one or more of trimethyl phosphate (TMP), triethyl phosphate (TEP), tripropyl phosphate (TPrP), tributyl phosphate (TBP), dimethyl phosphate (DMMP), tri(2,2,2-trifluoroethyl) phosphate (TFP), tris(trimethylsilyl) phosphite (TMSP), 2-(2,2,2-trifluoroethoxy)-1,3,2-dioxaphospholane 2-oxide (TFEP), methyl 3,3,3-trifluorophosphonate (MTFP), poly[bis(ethoxy)phosphazene] (EEEP), 2,2,2-trifluoro-N,N-dimethylacetamide (FDMA), and perfluoro-2-methyl-3-pentanone (PFMP).

Molecules of the flame retardant interact with molecules of the ester solvent to weaken their solvation structures, thereby achieving an effect of a high-concentration electrolyte while improving the safety of the battery.

In some embodiments, cations of the ionic liquid include one or more of nitrogen-containing onium ions and phosphorus-containing onium ions, and anions of the ionic liquid include one or more of halogen ions, phosphate ions, borate ions, and sulfimide anions.

In some embodiments, the cations of the ionic liquid include one or more of 1-butyl-3-methylimidazolium ([Bmin]⁺), 1-benzyl-3-methylimidazolium ([Bzmin]⁺), 3-methyl-1-ethoxycarbonylmethylimidazolium ([Etmim]⁺), 1-alkyl-3-methylimidazolium ([Cnmim]⁺), 1-[(trimethylsilyl)methyl]benzotriazolium ([SiMBIM]⁺), N-alkyl-N-methylpiperidinium ([CnC1pip]⁺), 5-azoniaspiro[4.4]nonane ([AS[mn]]⁺), trihexyl(tetradecyl)phosphonium ions ([Tf2N]⁺), tetrabutylphosphonium ions ([Pnnnn]⁺), and N-butyl-N-methylpyrrolidinium ([Pyr₁₄]⁺); and optionally, the cations of the ionic liquid include tetrabutylphosphonium ions or N-butyl-N-methylpyrrolidinium.

In some embodiments, the anions of the ionic liquid include one or more of chloride ions ([Cl]⁻), bromide ions ([Br]⁻), iodide ions ([I]⁻), hexafluorophosphate ([PF₆]⁻), tetrafluoroborate ([BF₄]⁻), dicyanamide anions ([N(CN)₂]⁻), bis(fluorosulfonyl)imide anions ([FSI]⁻), and bis(trifluoromethylsulfonyl)imide ([TFSI]⁻); and optionally, the anions of the ionic liquid include one or more of hexafluorophosphate, bis(fluorosulfonyl)imide anions, and bis(trifluoromethylsulfonyl)imide anions.

In some embodiments, the ionic liquid includes one or more of tetrabutylphosphonium-hexafluorophosphate, N-butyl-N-methylpyrrolidine-hexafluorophosphate, 1-butyl-3-methylimidazole-bis(fluorosulfonyl)imide, 1-benzyl-3-methylimidazole-bis(fluorosulfonyl)imide, 1-alkyl-3-methylimidazole-bis(trifluoromethylsulfonyl)imide, 1-alkyl-3-methylimidazole-chloride, and N-alkyl-N-methylpiperidine-tetrafluoroborate.

The ionic liquid has wide electrochemical stability windows on both an oxidation side and a reduction side, which can ensure that the ionic liquid or an electrolyte obtained after the ionic liquid is mixed with the ester solvent also has a wide window. In addition, the ionic liquid can also stabilize a solid electrolyte interface (SEI) on a negative electrode side, thereby significantly improving the interface stability of the battery.

In some embodiments, the ester solvent includes one or more of ethylene carbonate (EC), propylene carbonate (PC), butylene carbonate (BC), vinylene carbonate (VC), fluoroethylene carbonate (FEC), ethyl methyl carbonate (EMC), dimethyl carbonate (DMC), diethyl carbonate (DEC), dipropyl carbonate (DPC), methyl propyl carbonate (MPC), ethyl propyl carbonate (EPC), γ-butyrolactone (BL), 1,3-propanesultone (1,3-PS), methyl propionate (MP), methyl butyrate (MB), ethyl acetate (EA), ethyl propionate (EP), propyl propionate (PP), and ethyl butyrate (EB); and optionally, the ester solvent includes one or more of diethyl carbonate, ethyl methyl carbonate, and fluoroethylene carbonate.

In some embodiments, the electrolyte includes a sodium salt, where the sodium salt includes one or more of sodium nitrate (NaNO₃), sodium perchlorate (NaClO₄), sodium hexafluorophosphate (NaPF₆), sodium tetrafluoroborate (NaBF₄), sodium tetrafluoroyttrate (NaYF₆), sodium hexafluoroarsenate (NaAsF₆), sodium acetate (CH₃COONa), sodium trifluoroacetate (CF₃COONa), sodium bis(oxalato)borate (NaBOB), sodium difluoro(oxalato)borate (NaDFOB), sodium tetraphenylborate (NaB(C₆H₅)₄), sodium trifluoromethanesulfonate (NaOTf), sodium bis(fluorosulfonyl)imide (NaFSI), sodium bis(trifluoromethanesulfonyl)imide (NaTFSI), and sodium (perfluorobutylsulfonyl)imide (NaFNFSI).

The electrolyte provided in this application is suitable for different types of sodium salts. When different types of sodium salts are applied to the electrolyte of this application, the battery has a wide electrochemical window and exhibits excellent cycling performance and storage performance.

In some embodiments, based on a total mass of the electrolyte, a mass percentage of the sodium salt is 2% to 70%, optionally 30% to 50%.

In some embodiments, based on the total mass of the electrolyte, the mass percentage of the sodium salt is 2%, 5%, 10%, 15%, 20%, 25%, 30%, 35%, 40%, 45%, 50%, 55%, 60%, 65%, or 70%. In a high-concentration electrolyte, solvent molecules are typically extruded or partially extruded to the first solvation shell structure and interface, which can avoid or reduce side reactions between the ester solvent and sodium metal. However, the high concentration may lead to a high viscosity and deteriorate interface kinetic performance. Due to high steric hindrance, the fluoroether diluent of this application cannot participate in the first solvation shell structure formed by sodium ions and the ester solvent. Therefore, the electrolyte can maintain a low viscosity coefficient while the solvation and interface structure is not changed. Therefore, the fluoroether diluent of this application can further achieve a synergistic effect in the high-concentration electrolyte, improving the interface stability and the cycling performance of the battery. When based on the total mass of the electrolyte, the mass percentage of the sodium salt is 2% to 70%, the electrolyte provided in this application can enhance the stability of the solid electrolyte interface (SEI) and improve the cycling performance and storage performance of the battery. When the mass percentage of the sodium salt is 30% to 50%, the high-concentration sodium salt can further reduce free solvent molecules in the solvent, reduce side reactions between the solvent and a negative electrode, and improve the cycling performance, storage performance, and safety of the battery.

In some embodiments, a volume ratio of the ester solvent to the mixture solvent is 1:9 to 4:1, optionally 3:7 to 7:3.

In some embodiments, an upper limit or lower limit of the volume ratio of the ester solvent to the mixture solvent is optionally 1:9, 1.5:9, 2:9, 2.5:9, 3:9, 3.5:9, 4:9, 4.5:9, 5:9, 5.5:9, 6:9, 6.5:9, 7:9, 7.5:9, 8:9, 8.5:9, 1:1, 1.5:1, 2:1, 2.5:1, 3:1, 3.5:1, or 4:1. In some embodiments, the upper limit or lower limit of the volume ratio of the ester solvent to the mixture solvent is optionally 3:7, 7:3, or 3:1.

When the volume ratio of the ester solvent to the mixture solvent is 1:9 to 4:1, the battery has a wide electrochemical window and excellent cycling performance and storage performance. When the volume ratio of the ester solvent to the mixture solvent is 3:7 to 7:3, the cycling performance and storage performance of the battery is further improved.

### [Sodium secondary battery]

An embodiment of this application provides a sodium secondary battery in any implementation.

In some embodiments, the sodium secondary battery includes the foregoing electrolyte.

In some embodiments, the sodium secondary battery is a sodium metal battery.

The sodium metal battery refers to a battery with a negative electrode active material containing sodium metal.

In some embodiments, the sodium secondary battery is a sodium secondary battery with no negative electrode.

The sodium secondary battery with no negative electrode uses no negative electrode active material and just uses a negative electrode current collector as a negative electrode. During an initial charging process, sodium is plated on the negative electrode and returns to a positive electrode during charging, thereby achieving a charge and discharge cycle. Since the battery with no negative electrode contains no negative electrode material and just uses the negative electrode current collector, the battery with no negative electrode can effectively overcome the defects caused by the pre-deposition of sodium metal and obtain a higher energy density than a metal sodium negative electrode. In addition, for the sodium secondary battery with no negative electrode, based on the high electrochemical performance maintained, the negative electrode does not need to be produced, so that the production cycle of the battery can be significantly shortened, and the production efficiency is improved.

In some embodiments, a CB value of the sodium secondary battery with no negative electrode is less than or equal to 0.1.

The CB value is obtained by dividing a capacity per unit area of a negative electrode plate by a capacity per unit area of a positive electrode plate in the sodium secondary battery. Since the sodium secondary battery with no negative electrode contains no negative electrode active material, the negative electrode plate has a small capacity per unit area, and the CB value of the sodium secondary battery is less than or equal to 0.1.

The ester solvent has a large value of a highest occupied molecular orbital (HOMO), so that after the electrolytic salt is dissolved in the ester solvent, the electrolyte has a higher potential on an oxidation side of the electrochemical stability window. However, when the ester solvent is collocated with a positive electrode active material, especially a layered oxide with a high energy density and high operating potential, the ester solvent still has the problem of chemical and electrochemical stability. In this application, the electrolyte including the ester solvent and the mixture solvent including one or more of the fluoroether diluent, the flame retardant, and the ionic liquid, so that a stable SEI film can be formed at an electrode/electrolyte interface, avoiding or reducing side reactions between sodium metal and the ester solvent molecules in the electrolyte, thereby improving the cycling performance, storage stability, and safety of the sodium secondary battery with no negative electrode.

In some embodiments, the secondary battery includes a positive electrode plate, where the positive electrode plate includes a positive electrode active material, and the positive electrode active material includes one or more of a Prussian blue compound, a polyanionic compound, and a layered oxide.

In some embodiments, the layered oxide is a layered transition metal oxide. A transition metal in the layered transition metal oxide may be at least one of Mn, Fe, Ni, Co, Cr, Cu, Ti, Zn, V, Zr, and Ce. Optionally, the layered transition metal oxide is, for example, NaₓMO₂, where M is one or more of Ti, V, Mn, Co, Ni, Fe, Cr, and Cu, and 0 < x ≤ 1.

The polyanionic compound may be a type of compound having metal ions, transition metal ions, and tetrahedral (YO₄)ⁿ⁻ anionic units. The metal ions are optionally one of sodium ions, lithium ions, potassium ions, and zinc ions; the transition metal is optionally at least one of Mn, Fe, Ni, Co, Cr, Cu, Ti, Zn, V, Zr, and Ce; Y is optionally at least one of P, S, and Si; and n represents the valence state of (YO₄)ⁿ⁻.

The Prussian blue compound may be a type of compound having sodium ions, transition metal ions, and cyanogen ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1.

In some embodiments, the positive electrode active material includes one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

The layered oxide has a high energy density, but when the layered oxide is collocated with the ester solvent of the battery with no negative electrode, the layered oxide exhibits low coulombic efficiency and poor cycling performance. The electrolyte provided in this application is collocated with the layered oxide, so that the cycling performance and storage stability of the battery at high voltages are effectively improved.

In some embodiments, a surface of a particle of the positive electrode active material is provided with a coating layer, where the coating layer includes one or more of a carbon material, polyaniline (PANI), polypyrrole (PPy), poly(3,4-ethylenedioxythiophene) (PEDOT), aluminum oxide (Al₂O₃), zinc oxide (ZnO), titanium oxide (TiO₂), zirconium oxide (ZrO₂), magnesium oxide (MgO), silicon oxide (SiO₂), lanthanum oxide (La₂O₃), sodium fluoride (NaF), lithium fluoride (LiF), and aluminum fluoride (AlF₃).

In some embodiments, the carbon material is amorphous carbon, graphite, or graphene.

The coating of the coating layer can effectively enhance the stability of the positive electrode active material, reduce metal dissolution and particle fracture of the positive electrode active material, especially the layered oxide, during cycling, and effectively improve the cycling performance and storage stability of the battery.

In some embodiments, a thickness of the coating layer is 2 nm to 1000 nm, optionally 10 nm to 100 nm.

In some embodiments, the thickness of the coating layer is optionally 2 nm, 5 nm, 10 nm, 20 nm, 30 nm, 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, or 1000 nm.

The coating layer with an appropriate thickness can achieve an effective improvement effect, avoiding excessively high sheet resistance of the positive electrode and battery performance degradation due to the excessive thickness of the coating layer.

In some embodiments, the secondary battery includes a negative electrode plate, where the negative electrode plate includes a negative electrode current collector and a primer layer provided on at least one surface of the negative electrode current collector, and the primer layer includes one or more of carbon nanotubes, graphite, graphene, silver-carbon composite nanoparticles, and tin-carbon composite nanoparticles.

In some embodiments, a surface density of the primer layer is 2 g/m² to 50 g/m².

In some embodiments, a thickness of the primer layer is 1 µm to 100 µm.

The primer layer within the above range can effectively guide the deposition of sodium in the sodium secondary battery with no negative electrode, reduce the formation of sodium dendrites at the negative electrode, and improve the uniformity of sodium metal deposition. In addition, the primer layer with an appropriate surface density and thickness can really make the absence of the negative electrode possible, improving the energy density and safety performance of the battery.

In some embodiments, the negative electrode current collector includes at least one of a metal foil, a metal foam current collector, a metal mesh current collector, a carbon felt current collector, a carbon cloth current collector, a carbon paper current collector, and a composite current collector.

In some embodiments, the metal foil is optionally a copper foil, an aluminum foil, a stainless steel foil, or a titanium foil; and the metal foam current collector is optionally copper foam, aluminum foam, or nickel foam. The metal mesh current collector is optionally a copper mesh, an aluminum mesh, or a stainless steel mesh. The composite current collector includes a current collector with a primer layer or a current collector with a polymer base film. The composite current collector may have a "sandwich" structure, with a polymer base film in the middle and metal foil on two sides. The composite current collector may alternatively be a current collector with metal foil on one side of a polymer base film. The polymer base film is optionally one of polyamide, polyethylene terephthalate, polyimide, polyethylene, polypropylene, polystyrene, polyvinyl chloride, acrylonitrile-butadiene-styrene copolymer, polybutylene terephthalate, poly(p-phenylene terephthalamide), polypropylene, polyoxymethylene, epoxy resin, phenolic resin, polytetrafluoroethylene, polyvinylidene fluoride, silicone rubber, and polycarbonate. In some embodiments, the secondary battery may include an outer package. The outer package may be used for packaging an electrode assembly and an electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, which, for example, may be polypropylene, polybutylene terephthalate, and polybutylene succinate.

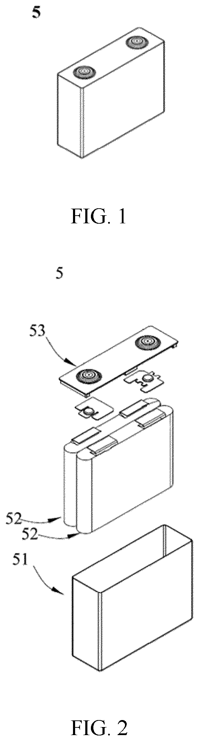

This application does not impose any special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates into the electrode assembly 52. There may be one or more electrode assemblies 52 in the secondary battery 5, and persons skilled in the art may make choices according to specific actual requirements.

In some embodiments, the secondary battery may be assembled into a battery module, and the battery module may include one or more secondary batteries. The specific quantity may be chosen by persons skilled in the art according to use and capacity of the battery module.

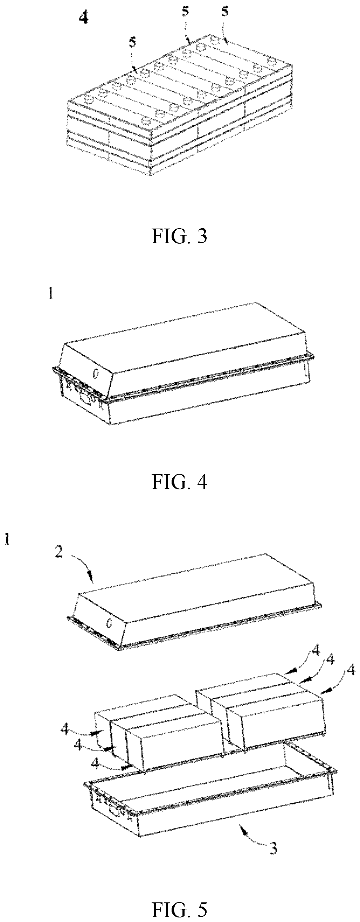

FIG. 3 shows a battery module 4 as an example. Referring to FIG. 3, in the battery module 4, a plurality of secondary batteries 5 may be sequentially arranged along a length direction of the battery module 4. Certainly, the secondary batteries may alternatively be arranged in any other manners. Further, the plurality of secondary batteries 5 may be fastened through fasteners.

Optionally, the battery module 4 may further include an enclosure with an accommodating space, and the plurality of secondary batteries 5 are accommodated in the accommodating space.

In some embodiments, the battery module may be further assembled into a battery pack, and the battery pack may include one or more battery modules. A specific quantity may be chosen by persons skilled in the art based on use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

For the electric apparatus, a secondary battery, a battery module, or a battery pack may be selected according to requirements for using the electric apparatus.

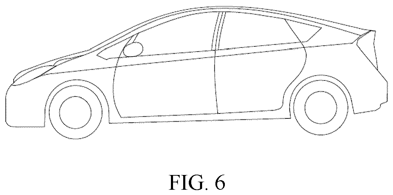

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of a secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### I. Preparation method

### Example 1

### 1. Preparation of positive electrode plate

A positive electrode active material carbon-coated sodium iron pyrophosphate (Na₄Fe₃(PO₄)₂P₂O₇/C), a binder polyvinylidene fluoride (PVDF), and a conductive agent conductive carbon black (Super P) were mixed well at a mass ratio of 96%:2%:2% in an N-methylpyrrolidone (NMP) solvent to prepare a positive electrode slurry. The positive electrode slurry was applied on a surface of an aluminum foil using an extrusion coater according to the requirement of the mass per unit area of the positive electrode active material, and then drying was performed. An electrode plate coated with the positive electrode slurry was subjected to cold pressing at a designed pressing density of 2.5 g/cm³ using a cold press to obtain a final positive electrode plate.

### 2. Preparation of negative electrode plate

Carbon nanotubes and sodium carboxymethyl cellulose were added to water at a mass ratio of 1:2 and stirred to form a uniform slurry. The slurry was applied on a negative electrode current collector, dried, and cut to obtain a negative electrode plate with no negative electrode structure, where a primer layer had a surface density of 10 g/m² and a thickness of 5 µm.

### 3. Separator

A polyethylene film (PE separator) was used as a separator.

### 4. Preparation of electrolyte

In an argon atmosphere glove box (H₂O < 0.1 ppm, O₂ < 0.1 ppm), diethyl carbonate and ethyl methyl carbonate were mixed at a volume ratio of 1:1, and sodium hexafluorophosphate was dissolved in the ester mixture solvent, and then the prepared solution and 1,1,2,2-tetrafluoroethyl-2,2,3,3-tetrafluoropropyl ether were mixed at a volume ratio of 2:1, so that a mass of sodium hexafluorophosphate accounted for 30wt% of a total mass of an electrolyte, to obtain an electrolyte of Example 1.

### 5. Preparation of battery

The positive electrode plate, the separator, and the negative electrode plate were sequentially stacked so that the separator was located between the positive and negative electrode plates for separation, the foregoing electrolyte was added, and a button battery was assembled.

In Examples 2 to 30, components of electrolytes were adjusted, and specific parameters were shown in Table 1. In Examples 9 to 13, two different types of mixture solvents were present in the electrolyte, with a volume ratio of 1:1. In Examples 19 and 20, electrolytic salts were all high-concentration electrolytic salts. The electrolytic salt in Example 19 contained 30wt% sodium hexafluorophosphate and 20wt% sodium bis(trifluoromethanesulfonyl)imide. The electrolytic salt in Example 20 contained 30wt% sodium hexafluorophosphate and 40wt% sodium bis(trifluoromethanesulfonyl)imide. In Examples 29 and 30, the positive electrode active materials were Na[Cu_{1/9}Ni_{2/9}Fe_{1/3}Mn_{1/3}]O₂ and ZrO₂-coated Na_{2/3}Ni_{1/6}Mn_{2/3}Cu_{1/9}Mg_{1/18}O₂ (with a thickness of a ZrO₂ coating layer being 30 nm), respectively. Specific parameters of other components were shown in Table 1.

In Comparative examples 1 to 6, the electrolytes all contained no mixture solvent. Electrolyte components or positive electrode active materials of the secondary batteries were adjusted. The specific parameters were shown in Table 1. Preparation methods were basically the same as those of Example 1.

### II. Battery performance test

### (1) Test of electrochemical stability window

An electrochemical workstation was used to test the window of the electrolyte, with a test voltage range of 1.0 V to 5.0 V and a scanning speed of 0.1 mV/s. The use window of the electrolyte was determined based on a starting position of a peak potential in a cyclic voltammetry (CV) curve. All CV tests in the experiment were completed on the 1470 multi-channel electrochemical workstation of Solartron, UK.

### (2) Room-temperature/high-temperature cycling performance

At 25°C/60°C and normal pressure (0.1 MPa), the battery was charged at a constant current of 0.1C to a voltage of 4 V (at a layered oxide positive electrode) or 3.7 V (at a sodium iron pyrophosphate positive electrode), and then discharged at a constant current of 0.1C to a voltage of 3.0 V. This process was the first charge and discharge cycle. Then, the battery was charged at a constant current of 1C to a voltage of 4 V/3.7 V, and then discharged at a constant current of 1C to a voltage of 3.0 V. A first discharge capacity was denoted as 100%, and the number of cycles until the discharge capacity was 80% was recorded.

### (3) Room-temperature/high-temperature storage performance

At 25°C/60°C, the prepared full battery was left standing for 4 hours, charged at a constant current of 0.1C to 4 V, then charged at a constant voltage of 4 V to 0.01C, and then left standing for 5 minutes. The thickness of the full battery was measured. After the full battery had been stored at 25°C/60°C for 60 days, the thickness of the full battery was measured. A thickness swelling rate of the battery was calculated using the following formula: thickness swelling rate of the full battery = [(thickness after storage - thickness before storage)/thickness before storage] × 100%. The test processes in comparative examples and other examples were the same as above, and specific test results were shown in Table 2.

**Table 1**

| No. | Positive electrode active material | Sodium salt | Mass percentage | Ester solvent | Volume ratio of different ester solvents | Mixture solvent | Volume ratio of ester solvent to mixture solvent |
|---|---|---|---|---|---|---|---|
| Example 1 | Carbon-coated sodium iron pyrophosphate | Sodium hexafluorophosphate | 20% | Diethyl carbonate + ethyl methyl carbonate | 1:1 | 1,1,2,2-tetrafluoroethyl-2,2,3,3-tetrafluoropropyl ether | 2:1 |
| Example 2 | Carbon-coated sodium iron pyrophosphate | Sodium hexafluorophosphate | 20% | Diethyl carbonate + ethyl methyl carbonate | 1:1 | Bis(2,2,2-trifluoroethyl) ether | 2:1 |
| Example 3 | Carbon-coated sodium iron pyrophosphate | Sodium hexafluorophosphate | 20% | Diethyl carbonate + ethyl methyl carbonate | 1:1 | 1,1,2,2-tetrafluoroethyl methyl ether | 2:1 |
| Example 4 | Carbon-coated sodium iron pyrophosphate | Sodium hexafluorophosphate | 20% | Diethyl carbonate + ethyl methyl carbonate | 1:1 | Tri(2,2,2-trifluoroethyl) phosphate | 2:1 |
| Example 5 | Carbon-coated sodium iron pyrophosphate | Sodium hexafluorophosphate | 20% | Diethyl carbonate + ethyl methyl carbonate | 1:1 | Perfluoro-2-methyl-3-pentanone | 2:1 |
| Example 6 | Carbon-coated sodium iron pyrophosphate | Sodium hexafluorophosphate | 20% | Diethyl carbonate + ethyl methyl carbonate | 1:1 | Dimethyl phosphate | 2:1 |
| Example 7 | Carbon-coated sodium iron pyrophosphate | Sodium hexafluorophosphate | 20% | Diethyl carbonate + ethyl methyl carbonate | 1:1 | Tetrabutylphosphonium-hexafluorophosphate | 2:1 |
| Example 8 | Carbon-coated sodium iron pyrophosphate | Sodium hexafluorophosphate | 20% | Diethyl carbonate + ethyl methyl carbonate | 1:1 | N-butyl-N-methylpyrrolidine-hexafluorophosphate | 2:1 |
| Example 9 | Carbon-coated sodium iron pyrophosphate | Sodium hexafluorophosphate | 20% | Diethyl carbonate + ethyl methyl carbonate | 1:1 | Tri(2,2,2-trifluoroethyl) phosphate + tetrabutylphosphonium-hexafluorophosphate (volume ratio of 1:1) | 2:1 |
| Example 10 | Carbon-coated sodium iron pyrophosphate | Sodium hexafluorophosphate | 20% | Diethyl carbonate + ethyl methyl carbonate | 1:1 | 1,1,2,2-tetrafluoroethyl-2,2,3,3-tetrafluoropropyl ether + tetrabutylphosphonium-hexafluorophosphate (volume ratio of 1:1) | 2:1 |
| Example 11 | Carbon-coated sodium iron pyrophosphate | Sodium hexafluorophosphate | 20% | Diethyl carbonate + ethyl methyl carbonate | 1:1 | 1,1,2,2-tetrafluoroethyl-2,2,3,3-tetrafluoropropyl ether + N-butyl-N-methylpyrrolidine-hexafluorophosphate (volume ratio of 1:1) | 2:1 |
| Example 12 | Carbon-coated sodium iron pyrophosphate | Sodium hexafluorophosphate | 20% | Diethyl carbonate + ethyl methyl carbonate | 1:1 | 1,1,2,2-tetrafluoroethyl-2,2,3,3-tetrafluoropropyl ether + perfluoro-2-methyl-3-pentanone (volume ratio of 1:1) | 2:1 |
| Example 13 | Carbon-coated sodium iron pyrophosphate | Sodium hexafluorophosphate | 20% | Diethyl carbonate + fluoroethylene carbonate | 2:1 | 1,1,2,2-tetrafluoroethyl-2,2,3,3-tetrafluoropropyl ether | 2:1 |
| Example 14 | Carbon-coated sodium iron pyrophosphate | Sodium hexafluorophosphate | 20% | Diethyl carbonate + fluoroethylene carbonate | 2:1 | Tri(2,2,2-trifluoroethyl) phosphate | 2:1 |
| Example 15 | Carbon-coated sodium iron pyrophosphate | Sodium hexafluorophosphate | 20% | Diethyl carbonate + fluoroethylene carbonate | 2:1 | Tetrabutylphosphonium-hexafluorophosphate | 2:1 |
| Example 16 | Carbon-coated sodium iron pyrophosphate | Sodium hexafluorophosphate | 2% | Diethyl carbonate + ethyl methyl carbonate | 1:1 | Tetrabutylphosphonium-hexafluorophosphate | 2:1 |
| Example 17 | Carbon-coated sodium iron pyrophosphate | Sodium hexafluorophosphate | 10% | Diethyl carbonate + ethyl methyl carbonate | 1:1 | Tetrabutylphosphonium-hexafluorophosphate | 2:1 |
| Example 18 | Carbon-coated sodium iron pyrophosphate | Sodium hexafluorophosphate | 30% | Diethyl carbonate + ethyl methyl carbonate | 1:1 | Tetrabutylphosphonium-hexafluorophosphate | 2:1 |
| Example 19 | Carbon-coated sodium iron pyrophosphate | 30% sodium hexafluorophosphate + 20% sodium bis(trifluoromethanesulfonyl)imide | 50% | Diethyl carbonate + ethyl methyl carbonate | 1:1 | Tetrabutylphosphonium-hexafluorophosphate | 2:1 |
| Example 20 | Carbon-coated sodium iron pyrophosphate | 30% sodium hexafluorophosphate + 40% sodium bis(trifluoromethanesulfonyl)imide | 70% | Diethyl carbonate + ethyl methyl carbonate | 1:1 | Tetrabutylphosphonium-hexafluorophosphate | 2:1 |
| Example 21 | Carbon-coated sodium iron pyrophosphate | Sodium hexafluorophosphate | 20% | Diethyl carbonate + ethyl methyl carbonate | 1:1 | Tetrabutylphosphonium-hexafluorophosphate | 1:9 |
| Example 22 | Carbon-coated sodium iron pyrophosphate | Sodium hexafluorophosphate | 20% | Diethyl carbonate + ethyl methyl carbonate | 1:1 | Tetrabutylphosphonium-hexafluorophosphate | 1:5 |
| Example 23 | Carbon-coated sodium iron pyrophosphate | Sodium hexafluorophosphate | 20% | Diethyl carbonate + ethyl methyl carbonate | 1:1 | Tetrabutylphosphonium-hexafluorophosphate | 3:7 |
| Example 24 | Carbon-coated sodium iron pyrophosphate | Sodium hexafluorophosphate | 24% | Diethyl carbonate + ethyl methyl carbonate | 1:1 | Tetrabutylphosphonium-hexafluorophosphate | 7:3 |
| Example 25 | Carbon-coated sodium iron pyrophosphate | Sodium hexafluorophosphate | 22% | Diethyl carbonate + ethyl methyl carbonate | 1:1 | Tetrabutylphosphonium-hexafluorophosphate | 3:1 |
| Example 26 | Carbon-coated sodium iron pyrophosphate | Sodium hexafluorophosphate | 20% | Diethyl carbonate + ethyl methyl carbonate | 1:1 | Tetrabutylphosphonium-hexafluorophosphate | 4:1 |
| Example 27 | Carbon-coated sodium iron pyrophosphate | Sodium bis(trifluoromethanesulfonyl)imide | 20% | Diethyl carbonate + ethyl methyl carbonate | 1:1 | Tri(2,2,2-trifluoroethyl) phosphate + tetrabutylphosphonium-hexafluorophosphate (volume ratio of 1:1) | 2:1 |
| Example 28 | Carbon-coated sodium iron pyrophosphate | Sodium bis(fluorosulfonyl)imide | 20% | Diethyl carbonate + ethyl methyl carbonate | 1:1 | Tri(2,2,2-trifluoroethyl) phosphate + tetrabutylphosphonium-hexafluorophosphate (volume ratio of 1:1) | 2:1 |
| Example 29 | Na[Cu_{1/9}Ni_{2/9}Fe_{1/3} Mn_{1/3}] O₂ | Sodium hexafluorophosphate | 20% | Diethyl carbonate + ethyl methyl carbonate | 1:1 | Tri(2,2,2-trifluoroethyl) phosphate + tetrabutylphosphonium-hexafluorophosphate (volume ratio of 1:1) | 2:1 |
| Example 30 | ZrO₂-coated Na_{2/3}Ni_{1/6}Mn_{2/3} CU_{1/9}Mg_{1/18}O₂ | Sodium hexafluorophosphate | 20% | Diethyl carbonate + ethyl methyl carbonate | 1:1 | Tri(2,2,2-trifluoroethyl) phosphate + tetrabutylphosphonium-hexafluorophosphate (volume ratio of 1:1) | 2:1 |
| Comparative example 1 | Carbon-coated sodium iron pyrophosphate | Sodium hexafluorophosphate | 20% | Diethyl carbonate + ethyl methyl carbonate | 1:1 | / | / |
| Comparative example 2 | Carbon-coated sodium iron pyrophosphate | Sodium hexafluorophosphate | 20% | Diethyl carbonate + fluoroethylene carbonate | 2:1 | / | / |
| Comparative example 3 | Na[Cu_{1/9}Ni_{2/9}Fe_{1/3} Mn_{1/3}] O₂ | Sodium hexafluorophosphate | 20% | Diethyl carbonate + ethyl methyl carbonate | 1:1 | / | / |
| Comparative example 4 | ZrO₂-coated Na_{2/3}Ni_{1/6}Mn_{2/3} CU_{1/9}Mg_{1/18}O₂ | Sodium hexafluorophosphate | 20% | Diethyl carbonate + ethyl methyl carbonate | 1:1 | / | / |
| Comparative example 5 | Carbon-coated sodium iron pyrophosphate | 30% sodium hexafluorophosphate + 20% sodium bis(trifluoromethanesulfonyl)imide | 50% | Diethyl carbonate + ethyl methyl carbonate | 1:1 | / | / |
| Comparative example 6 | Carbon-coated sodium iron pyrophosphate | 30% sodium hexafluorophosphate + 40% sodium bis(trifluoromethanesulfonyl)imide | 70% | Diethyl carbonate + ethyl methyl carbonate | 1:1 | / | / |

**Table 2**

| No. | Electrochemical stability window width (V, 25°C) | Cycles to room-temperature cycle capacity retention rate of 80% (cycles) (at charge and discharge rate of 1C at 25°C) | Cycles to high-temperature cycle capacity retention rate of 80% (cycles) (at charge and discharge rate of 1C at 25°C) | Room-temperature storage swelling rate (%) (25°C) | High-temperature storage swelling rate (%) (60°C) |
|---|---|---|---|---|---|
| Example 1 | 4.6 | 900 | 550 | 16 | 24 |
| Example 2 | 4.7 | 700 | 400 | 20 | 26 |
| Example 3 | 4.5 | 550 | 250 | 24 | 31 |
| Example 4 | 4.7 | 750 | 500 | 18 | 24 |
| Example 5 | 4.8 | 600 | 400 | 17 | 23 |
| Example 6 | 4.5 | 500 | 250 | 22 | 27 |
| Example 7 | 4.8 | 950 | 650 | 14 | 21 |
| Example 8 | 4.7 | 800 | 450 | 17 | 25 |
| Example 9 | 4.8 | 1000 | 750 | 14 | 18 |
| Example 10 | 4.8 | 1200 | 800 | 12 | 17 |
| Example 11 | 4.7 | 850 | 600 | 16 | 23 |
| Example 12 | 4.6 | 600 | 450 | 18 | 25 |
| Example 13 | 4.5 | 700 | 350 | 23 | 30 |
| Example 14 | 4.6 | 600 | 300 | 25 | 32 |
| Example 15 | 4.7 | 800 | 450 | 20 | 28 |
| Example 16 | 4.7 | 800 | 400 | 19 | 26 |
| Example 17 | 4.8 | 900 | 550 | 16 | 23 |
| Example 18 | 4.8 | 1000 | 700 | 13 | 19 |
| Example 19 | 4.8 | 1100 | 700 | 14 | 20 |
| Example 20 | 4.9 | 1200 | 750 | 13 | 18 |
| Example 21 | 4.6 | 750 | 400 | 18 | 24 |
| Example 22 | 4.7 | 800 | 500 | 17 | 22 |
| Example 23 | 4.7 | 950 | 600 | 14 | 20 |
| Example 24 | 4.8 | 1100 | 800 | 13 | 17 |
| Example 25 | 4.9 | 1050 | 700 | 14 | 18 |
| Example 26 | 4.8 | 900 | 500 | 16 | 23 |
| Example 27 | 4.7 | 700 | 450 | 17 | 26 |
| Example 28 | 4.6 | 600 | 250 | 20 | 32 |
| Example 29 | 4.8 | 400 | 250 | 21 | 29 |
| Example 30 | 4.8 | 550 | 300 | 19 | 26 |
| Comparative example 1 | 4.3 | 400 | 200 | 28 | 36 |
| Comparative example 2 | 4.2 | 250 | 50 | 34 | 43 |
| Comparative example 3 | 4.3 | 200 | 50 | 32 | 46 |
| Comparative example 4 | 4.3 | 300 | 150 | 27 | 35 |
| Comparative example 5 | 4.4 | 450 | 150 | 22 | 31 |
| Comparative example 6 | 4.5 | 500 | 200 | 21 | 29 |

It can be seen from Table 1 and Table 2 that in Examples 1 to 30, the electrolyte for sodium secondary battery with no negative electrode includes the ester solvent and the mixture solvent, where the mixture solvent includes one or more of the fluoroether diluent, the flame retardant, and the ionic liquid.

From the comparison of Examples 1 to 12 and Comparative example 1 and the comparison of Examples 13 to 15 and Comparative example 2, it can be seen that compared with an electrolyte including only the ester solvent, the electrolyte including the ester solvent and the mixture solvent that includes one or more of the fluoroether diluent, the flame retardant, and the ionic liquid can broaden the electrochemical stability window, thereby improving the cycling performance and storage performance of the battery.

It can be seen from Examples 1 to 8 that the sodium secondary battery with no negative electrode, including the electrolyte containing the ester solvent and ionic liquid tetrabutylphosphonium-hexafluorophosphate, has a wider electrochemical window and exhibits more excellent cycling performance and storage performance.

It can be seen from the comparison of Examples 9 to 21 and Comparative example 1 that two different types of mixture solvents added to the ester solvent can also broaden the electrochemical stability window and effectively improve the cycling performance and storage performance of the battery. In Example 10, the mixture solvent including the fluoroether diluent 1,1,2,2-tetrafluoroethyl-2,2,3,3-tetrafluoropropyl ether and the ionic liquid tetrabutylphosphonium-hexafluorophosphate has a synergistic effect, so that when the sodium secondary battery with no negative electrode is compared with the battery with no negative electrode and no mixture solvent in Comparative example 1, at room temperatures, the number of cycles to the capacity retention rate of 80% is increased by four times, and the storage swelling rate is reduced by more than 50%; and at high temperatures, the number of cycles is increased by four times, and the storage swelling rate is reduced by more than 50%.

It can be seen from Examples 9, 27, and 28 that the electrolyte provided in this application is suitable for various different sodium salts, and the battery has a wide electrochemical window and exhibits excellent cycling performance and storage performance.

It can be seen from Examples 7 and 16 to 20 that when based on the total mass of the electrolyte, the mass percentage of the sodium salt is 2% to 70%, the battery exhibits a wide electrochemical window and excellent room-temperature and high-temperature cycling performance and storage performance.

It can be seen from the comparison of Examples 19 and 20 and Comparative examples 5 and 6 that the electrolyte of this application is also suitable for a high-concentration electrolyte system, which can further effectively broaden the electrochemical stability window of the battery based on high performance due to the high concentration, thereby significantly improving the cycling performance and storage performance of the battery.

It can be seen from Examples 7 and 21 to 26 that when the volume ratio of the solution formed after the sodium salt is dissolved in the ester solvent to the mixture solvent is 1:9 to 4:1, as compared with Comparative example 1 including only the ester solvent but including no mixture solvent, the battery has a broadened electrochemical window and exhibits more excellent cycling performance and storage performance. When the volume ratio of the solution formed after the sodium salt is dissolved in the ester solvent to the mixture solvent is 3:7 to 7:3, the battery has a broadened electrochemical window and excellent cycling performance and storage performance.

It can be seen from the comparison of Examples 29 and 30 and Comparative examples 4 and 5 that the electrolyte provided in this application is suitable for various positive electrode materials, and both polyanions and layered oxides can effectively broaden the electrochemical stability window of the battery and improve the high-voltage cycling performance and storage stability of the battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrolyte for sodium secondary battery, **characterized by** comprising an ester solvent and a mixture solvent, wherein the mixture solvent comprises one or more of a fluoroether diluent, a flame retardant, and ionic liquid.

2. The electrolyte according to claim 1, **characterized in that** the fluoroether diluent comprises a compound represented by formula I or formula II, 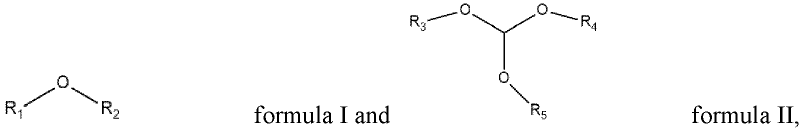 wherein R₁, R₂, R₃, R₄, and R₅ are each independently selected from unsubstituted or fluorinated C₁-C₆ alkyl; at least one of R₁ and R₂ contains a fluorine atom; and at least one of R₃, R₄, and R₅ contains a fluorine atom.

3. The electrolyte according to claim 1 or 2, **characterized in that**, at 25°C, the solubility of sodium bis(fluorosulfonyl)imide in the fluoroether diluent is less than 10 g.

4. The electrolyte according to any one of claims 1 to 3, **characterized in that** the fluoroether diluent comprises one or more of bis(2,2,2-trifluoroethyl) ether, 1,1,2,2-tetrafluoroethyl methyl ether, 1,1,2,2-tetrafluoroethyl-2,2,3,3-tetrafluoropropyl ether, 1,1,2,2-tetrafluoroethyl-2,2,2-trifluoroethyl ether, tris(trifluoroethoxy)methane, methyl nonafluorobutyl ether, 1,1,1,3,3,3-hexafluoroisopropyl methyl ether, and 1H,1H,5H-octafluoropentyl-1,1,2,2-tetrafluoroethyl ether.

5. The electrolyte according to any one of claims 1 to 4, **characterized in that** the flame retardant comprises one or more of a phosphate compound, a phosphite compound, a polyphosphazene compound, a highly fluorinated or perfluorinated amide compound, and a ketone compound.

6. The electrolyte according to claim 5, **characterized in that** the phosphate compound comprises a compound represented by formula III, 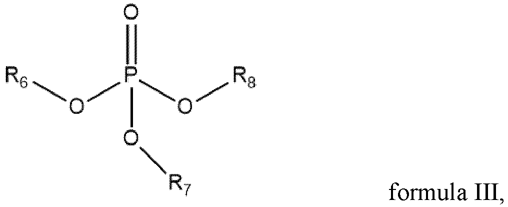 wherein R₆, R₇, and R₈ are each independently selected from hydrogen and unsubstituted or fluorinated C₁-C₆ alkyl; at least one of R₆, R₇, and R₈ comprises a fluorine atom; and R₇ and R₈ optionally form a cyclic structure together with oxygen connected thereto and phosphorus connected to oxygen.

7. The electrolyte according to claim 5, **characterized in that** the phosphite compound comprises a compound represented by formula IV, 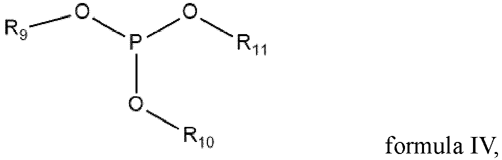 wherein R₉, R₁₀, and R₁₁ are each independently selected from unsubstituted or silylated C₁-C₆ alkyl.

8. The electrolyte according to claim 5, **characterized in that** the polyphosphazene compound comprises a polymer represented by formula VI, 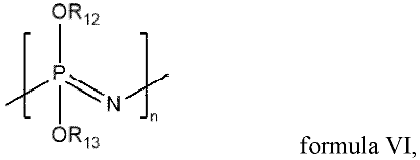 wherein R₁₂ and R₁₃ are each independently selected from substituted or unsubstituted C₁-C₆ alkyl.

9. The electrolyte according to any one of claims 1 to 8, **characterized in that** the flame retardant comprises one or more of trimethyl phosphate, triethyl phosphate, tripropyl phosphate, tributyl phosphate, dimethyl phosphate, tri(2,2,2-trifluoroethyl) phosphate, tris(trimethylsilyl) phosphite, 2-(2,2,2-trifluoroethoxy)-1,3,2-dioxaphospholane 2-oxide, methyl 3,3,3-trifluorophosphonate, poly[bis(ethoxy)phosphazene], 2,2,2-trifluoro-N,N-dimethylacetamide, and perfluoro-2-methyl-3-pentanone.

10. The electrolyte according to any one of claims 1 to 9, **characterized in that** cations of the ionic liquid comprise one or more of nitrogen-containing onium ions and phosphorus-containing onium ions, and anions of the ionic liquid comprise one or more of halogen ions, phosphate ions, borate ions, and sulfimide anions.

11. The electrolyte according to any one of claims 1 to 10, **characterized in that** the cations of the ionic liquid comprise one or more of 1-butyl-3-methylimidazolium, 1-benzyl-3-methylimidazolium, 3-methyl-1-ethoxycarbonyl methylimidazolium, 1-alkyl-3-methylimidazolium, 1-[(trimethylsilyl)methyl]benzotriazolium, N-alkyl-N-methylpiperidinium, 5-azoniaspiro[4.4]nonane, trihexyl(tetradecyl)phosphonium ions, tetrabutylphosphonium ions, and N-butyl-N-methylpyrrolidinium; and optionally, the cations of the ionic liquid comprise tetrabutylphosphonium ions or N-butyl-N-methylpyrrolidinium.

12. The electrolyte according to any one of claims 1 to 11, **characterized in that** the anions of the ionic liquid comprise one or more of chloride ions, bromide ions, iodide ions, hexafluorophosphate, tetrafluoroborate, dicyanamide anions, bis(fluorosulfonyl)imide anions, and bis(trifluoromethylsulfonyl)imide; and optionally, the anions of the ionic liquid comprise one or more of hexafluorophosphate, bis(fluorosulfonyl)imide anions, and bis(trifluoromethylsulfonyl)imide anions.

13. The electrolyte according to any one of claims 1 to 12, **characterized in that** the ionic liquid comprises one or more of tetrabutylphosphonium-hexafluorophosphate, N-butyl-N-methylpyrrolidine-hexafluorophosphate, 1-butyl-3-methylimidazole-bis(fluorosulfonyl)imide, 1-benzyl-3-methylimidazole-bis(fluorosulfonyl)imide, 1-alkyl-3-methylimidazole-bis(trifluoromethylsulfonyl)imide, 1-alkyl-3-methylimidazole-chloride, and N-alkyl-N-methylpiperidine-tetrafluoroborate.

14. The electrolyte according to any one of claims 1 to 13, **characterized in that** the ester solvent comprises one or more of ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, γ-butyrolactone, 1,3-propanesultone, methyl propionate, methyl butyrate, ethyl acetate, ethyl propionate, propyl propionate, and ethyl butyrate; and optionally, the ester solvent comprises one or more of diethyl carbonate, ethyl methyl carbonate, and fluoroethylene carbonate.

15. The electrolyte according to any one of claims 1 to 14, **characterized in that** based on a total mass of the electrolyte, a mass percentage of the mixture solvent is greater than 10%.

16. The electrolyte according to any one of claims 1 to 15, **characterized in that** the electrolyte comprises a sodium salt, wherein the sodium salt comprises one or more of sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium bis(oxalato)borate, sodium difluoro(oxalato)borate, sodium tetraphenylborate, sodium trifluoromethanesulfonate, sodium bis(fluorosulfonyl)imide, sodium bis(trifluoromethanesulfonyl)imide, and sodium (perfluorobutylsulfonyl)imide.

17. The electrolyte according to claim 16, **characterized in that** based on the total mass of the electrolyte, a mass percentage of the sodium salt is 2% to 70%, optionally 30% to 50%.

18. The electrolyte according to any one of claims 1 to 17, **characterized in that** a volume ratio of the ester solvent to the mixture solvent is 1:9 to 4:1, optionally 3:7 to 7:3.

19. A sodium secondary battery, **characterized by** comprising the electrolyte according to any one of claims 1 to 18.

20. The sodium secondary battery according to claim 19, **characterized in that** the sodium secondary battery is a sodium metal battery.

21. The sodium secondary battery according to claim 19 or 20, **characterized in that** the sodium secondary battery is a sodium secondary battery with no negative electrode.

22. The sodium secondary battery according to any one of claims 19 to 21, **characterized in that** the sodium secondary battery comprises a positive electrode plate, wherein the positive electrode plate comprises a positive electrode active material, and the positive electrode active material comprises one or more of a Prussian blue compound, a polyanionic compound, and a layered oxide.

23. The sodium secondary battery according to claim 22, **characterized in that** a surface of a particle of the positive electrode active material is provided with a coating layer, wherein the coating layer comprises one or more of a carbon material, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride.

24. The sodium secondary battery according to claim 23, **characterized in that** a thickness of the coating layer is 2 nm to 1000 nm, optionally 10 nm to 100 nm.

25. The sodium secondary battery according to any one of claims 19 to 24, **characterized in that** the sodium secondary battery comprises a negative electrode plate, wherein the negative electrode plate comprises a negative electrode current collector and a primer layer provided on at least one surface of the negative electrode current collector, and the primer layer comprises one or more of carbon nanotubes, graphite, graphene, silver-carbon composite nanoparticles, and tin-carbon composite nanoparticles.

26. The sodium secondary battery according to claim 25, **characterized in that** the negative electrode current collector comprises at least one of a metal foil, a metal foam current collector, a metal mesh current collector, a carbon felt current collector, a carbon cloth current collector, a carbon paper current collector, and a composite current collector.

27. The sodium secondary battery according to claim 25 or 26, **characterized in that** a surface density of the primer layer is 2 g/m² to 50 g/m².

28. The sodium secondary battery according to claim 25 or 26, **characterized in that** a thickness of the primer layer is 1 µm to 100 µm.

29. A battery module, **characterized by** comprising the sodium secondary battery according to any one of claims 19 to 28.

30. A battery pack, **characterized by** comprising the sodium secondary battery according to any one of claims 19 to 28 or the battery module according to claim 29.

31. An electric apparatus, **characterized by** comprising at least one of the sodium secondary battery according to any one of claims 19 to 28, the battery module according to claim 29, and the battery pack according to claim 30.
